(19) Europäisches Patentamt
European Patent Office
Office européen des brevets

(11) **EP 2 820 382 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **13707363.1**

(22) Anmeldetag: **28.02.2013**

(51) Int Cl.:
***G01D 5/14*** *(2006.01)* ***G01D 5/244*** *(2006.01)*
***G01D 3/08*** *(2006.01)*

(86) Internationale Anmeldenummer:
**PCT/EP2013/054102**

(87) Internationale Veröffentlichungsnummer:
**WO 2013/127962 (06.09.2013 Gazette 2013/36)**

(54) **VORRICHTUNG UND VERFAHREN ZUR REDUNDANTEN, ABSOLUTEN POSITIONSBESTIMMUNG EINES BEWEGLICHEN KÖRPERS**

APPARATUS AND METHOD FOR THE REDUNDANT, ABSOLUTE POSITION DETERMINATION OF A MOVABLE BODY

DISPOSITIF ET PROCÉDÉ POUR LA DÉTERMINATION DE POSITION ABSOLUE REDONDANTE D’UN CORPS MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.02.2012 DE 102012203158**
**29.02.2012 DE 102012203149**
**29.02.2012 DE 102012203153**

(43) Veröffentlichungstag der Anmeldung:
**07.01.2015 Patentblatt 2015/02**

(73) Patentinhaber: **IDT Europe GmbH**
**01109 Dresden (DE)**

(72) Erfinder: **JANISCH, Josef**
**A-8262 Ilz (AT)**

(74) Vertreter: **Lippert Stachow Patentanwälte Rechtsanwälte**
**Partnerschaft mbB**
**Krenkelstraße 3**
**01309 Dresden (DE)**

(56) Entgegenhaltungen:
**EP-A1- 0 877 488** **EP-A1- 1 798 523**
**EP-A1- 2 233 889** **EP-A2- 2 284 495**
**DE-A1- 10 320 057** **DE-A1- 10 360 042**
**DE-A1- 19 817 356** **DE-T5-112008 003 576**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 820 382 B1

## Beschreibung

Die Erfindung betrifft eine Vorrichtung und ein Verfahren zur redundanten, absoluten Positionsbestimmung eines beweglichen Körpers. Die Erfindung betrifft im Besonderen eine Vorrichtung und ein Verfahren zur absoluten, redundanten Positionsbestimmung für Off-Axis und On-Axis Anwendungen mittels magnetosensitiver Sensoren.

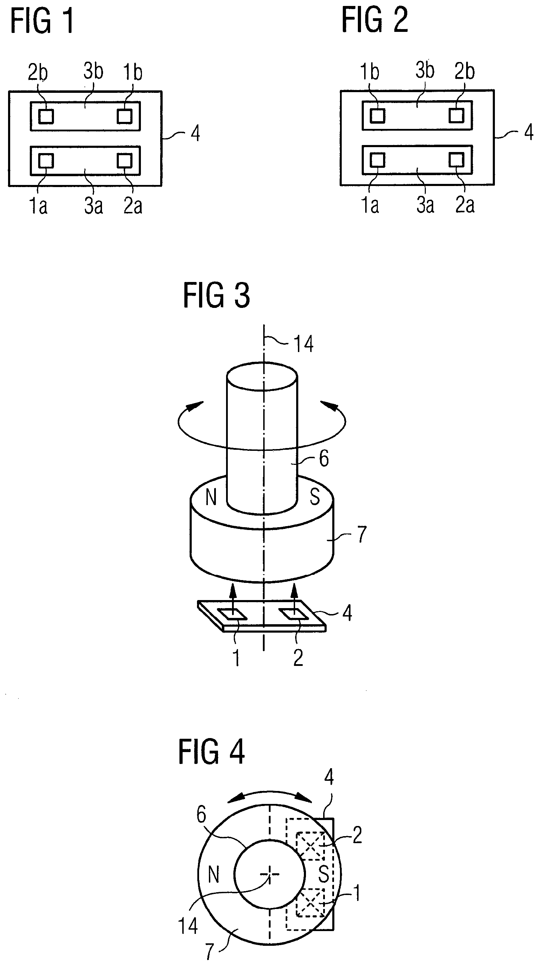

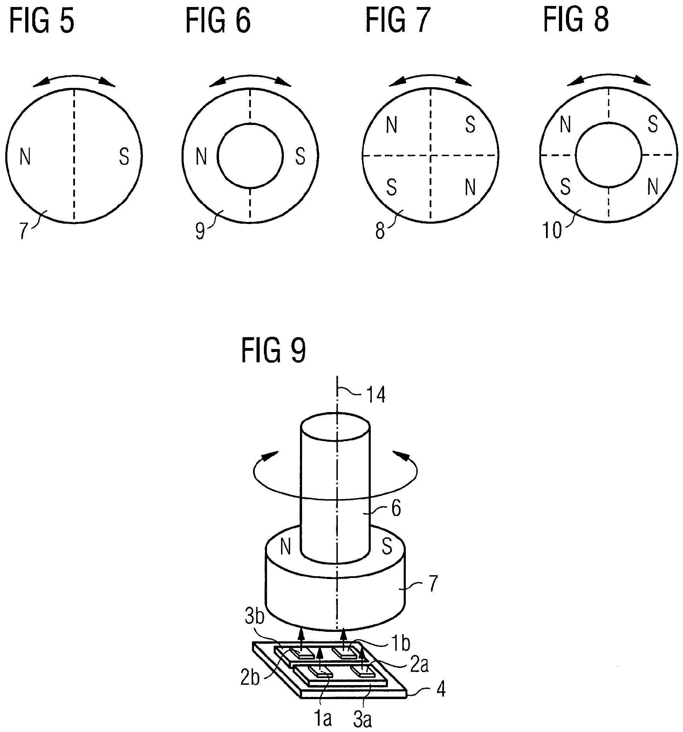

D 198 17 356 A1 betrifft einen Winkelgeber und ein Verfahren zur Winkelbestimmung mittels Hallelementen. Wie Figur 1 der D2 zu entnehmen sind jeweils zwei Hall-Elemente (4,5,6,7) rechtwinklig angeordnet, damit sich ein Phasenversatz der Sensorsignale von 90° ergibt, siehe Figur 5. Der Phasenversatz von 90° ist zwingend, wie sich aus dem Verfahren zur Winkelbestimmung, siehe Seite 4, Zeilen 19 - 25 ergibt. Wäre der Phasenversatz ungleich 90°, könnten aus den beiden Summensignalen mittels der Sinus-Cosinus Auswerteschaltung über eine Arctustangensberechnung der Winkel nicht exakt bestimmt werden.

D 103 60 042 A1 betrifft ein Verfahren und Messsystem zur Bestimmung der absoluten Winkellage. Hierbei werden zunächst relative Winkellagen der Sensoren 15, 17 ermittelt, siehe Fig. 1 dieser Druckschrift, die von der absoluten Winkellage unabhängig sind. Sämtliche Sensorsignale werden durch eine elektronische Einrichtung ausgewertet. Wie sämtlichen Figuren dieser Druckschrift zu entnehmen ist, sind die Sensoren jedoch nicht auf einem gemeinsamen Chip, sondern auf separaten Chips untergebracht. Eine Anordnung auf einem gemeinsamen Chip ist hier aufgrund des beschriebenen Verfahrens zur Winkelbestimmung nicht möglich.

EP 2 233 889 A1 betrifft eine Messvorrichtung zur redundanten Erfassung eines Drehwinkels mit einer ersten Sensoranordnung und ersten Signalverarbeitungsrichtung und einer zweiten Sensoranordnung und zweiten Signalverarbeitungseinrichtung. Insbesondere offenbart diese Druckschrift eine Vorrichtung, bei der sämtliche Sensoren auf einem Halbleiterchip integriert sind, siehe Absatz 9. Allerdings sind die Hallsensoren so angeordnet, dass das Messsignal eines ersten Hallsensors um 90° zum Messsignal des anderen Hallsensors phasenverschoben ist, siehe Absatz 23 unten.

WO 2007/071 383 betrifft eine Vorrichtung zur berührungslosen, redundanten Positionsbestimmung, in der zwei integrierte, auf Hallsensor-Basis aufgebaute magnetische Winkelsensor-Schaltkreise in einem gemeinsamen Gehäuse übereinander platziert werden, wobei die beiden Schaltkreise durch eine isolierende Zwischenschicht voneinander getrennt sind.

Bei diesen Winkelsensoren ist ein Aufbau essentiell, in welcher die Drehachse des rotierenden Magneten zentrisch über dem Mittelpunkt der auf dem Schaltkreis kreisförmig angeordneten integrierten Hallsensorgruppe zu liegen kommt. Ein seitlicher Versatz der Sensorelemente relativ zur Drehachse führt zu einer Zunahme des Winkelfehlers, insbesondere wenn sich die Hallsensoren außerhalb des zwischen den Polen der Magnetfeldquelle annähernd linear verlaufenden vertikalen Magnetfelds Bz befinden.

Eine Positionierung der Schaltkreise nebeneinander in einem gemeinsamen Gehäuse ist somit aus diesem Grund nicht sinnvoll. Um eine Zentrierung beider Winkelsensoren relativ zur Drehachse der Magnetfeldquelle zu erreichen, müssen diese daher im gemeinsamen Gehäuse übereinander eingebaut werden.

Nachteilig an diesem Aufbau ist der höhere Aufwand durch die übereinander liegende Montage der Schaltkreise mit einer dazwischen liegenden zusätzlichen Isolationslage.

Ein weiterer Nachteil ist, dass der Toleranzbereich für den vertikalen Abstand zwischen Magnet und Sensorgehäuse durch den übereinander liegenden Aufbau stark eingeschränkt ist, da sowohl der unten liegende als auch der oben liegende Winkelsensor innerhalb eines Toleranzfensters für den optimalen Arbeitsbereich der Stärke des magnetischen Feldes liegen müssen. Des Weiteren ist dieser Aufbau nur für axialen Aufbau geeignet, wo sich der Winkelsensor-Schaltkreis unterhalb der Magnetfeldquelle, normal und zentrisch zur Drehachse befindet.

In sicherheitskritischen Anwendungen wie z.B. einem Antriebsmotor für ein elektronisches Lenksystem EPS können z.B. bei Lastwechseln Kräfte auf die zu messende Antriebswelle wirken, welche diese in axialer Richtung verschieben. Diese Verschiebung wirkt sich durch den axialen Aufbau in einer Abstandsänderung zwischen der Magnetfeldquelle, welche am Ende der Antriebswelle angebracht ist und dem Sensor aus. Um eine mögliche Beschädigung von Sensor oder Magnet durch mechanischen Kontakt beider Objekte zu vermeiden, muss ein Mindestabstand zwischen Magnetfeldquelle und Sensorgehäuse eingehalten werden, was wiederum den Toleranzbereich für den Abstand zwischen Sensor und Magnetfeldquelle weiter einschränkt.

Der Erfindung liegt die Aufgabe zugrunde, ein redundantes Sensorsystem zur berührungslosen Erfassung der absoluten Position eines relativ zu magnetosensitiven Sensoren beweglichen Elements anzugeben, wobei die magnetosensitiven Sensoren derart angeordnet sein können, dass deren Signale einen Phasenversatz ungleich 90° haben können.

Der Erfindung liegt im Besonderen die Aufgabe zugrunde, ein redundantes Sensorsystem für so genannte Off-Axis-Anwendungen, d.h. Anwendungen bei denen sich magnetosensitive Sensoren außerhalb der Symmetrieachse eines beweglichen Körpers befinden, bereitzustellen, welches in der Lage ist, mittels zweier getrennter Sensorsysteme eine redundante Positionserkennung eines drehbar gelagerten Körpers zu ermöglichen. Unter magnetosensitiven Sensoren sind insbesondere Hallsensoren zu verstehen.

Diese Aufgabe wird mit einer Vorrichtung gemäß dem unabhängigen Vorrichtungsanspruch und einem Verfahren gemäß dem unabhängigen Verfahrensanspruch gelöst. Die abhängigen Ansprüche betreffen besondere Ausführungsformen.

Die Erfindung betrifft eine Vorrichtung zur berührungslosen Erfassung der absoluten Position eines relativ zu magnetosensitiven Sensoren beweglichen Elements, gemäß Anspruch 1.

Eine Ausgestaltung betrifft eine Vorrichtung für sog. Off-Axis-Anwendungen zur Bestimmung einer absoluten Drehstellung des beweglichen Elements. Hierbei ist vorgesehen, dass das bewegliche Element drehbar gelagert ist und dass die Ebene parallel zur Drehachse angeordnet ist. In einem gemeinsamen Gehäuse, welches seitlich der Magnetfeldquelle parallel zur Drehachse stationär angebracht ist, sind die zwei Sensorelemente untergebracht, welche jeweils zwei in einer Ebene liegende, in Richtung der Drehbewegung räumlich versetzte magnetosensitive Sensoren mit der dazugehörigen Auswerteelektronik beinhalten und die radiale Komponente des Magnetfeldes erfassen und auswerten.

Eine Ausgestaltung betrifft eine Vorrichtung für sog. On-Axis-Anwendungen zur Bestimmung einer absoluten Drehstellung des beweglichen Elements. Hierbei ist vorgesehen, dass das bewegliche Element drehbar gelagert ist und dass die Ebene normal zur Drehachse angeordnet ist. In einem gemeinsamen Gehäuse, welches parallel zur Ebene stationär angebracht ist, sind die zwei Sensorelemente untergebracht, welche jeweils zwei in einer Ebene liegende, in Richtung der Drehbewegung räumlich versetzte magnetosensitive Sensoren mit der dazugehörigen Auswerteelektronik beinhalten und die axiale Komponente des Magnetfeldes erfassen und auswerten.

Bevorzugt sind die magnetosensitiven Sensoren äquidistant und symmetrisch um die Drehachse in dem gemeinsamen Gehäuse angeordnet.

Hierbei ist vorgesehen, dass das bewegliche Element drehbar gelagert ist und dass die Ebene normal zur Drehachse angeordnet ist. In einem gemeinsamen Gehäuse, welches seitlich der Magnetfeldquelle parallel zur Drehachse stationär angebracht ist, sind die zwei Sensorelemente untergebracht, welche jeweils zwei in einer Ebene liegende, in Richtung der Drehbewegung räumlich versetzte magnetosensitive Sensoren mit der dazugehörigen Auswerteelektronik beinhalten und die axiale Komponente des Magnetfeldes erfassen und auswerten.

In einer Ausgestaltung ist vorgesehen, dass die absolute Drehstellung über einen Winkelbereich von 360° erfasst wird, wobei die Magnetfeldquelle als 2-polig diametral magnetisierter Scheibenmagnet oder Ringmagnet ausgebildet ist.

In einer weiteren Ausgestaltung ist vorgesehen, dass die absoluten Drehstellung über einen Winkelbereich von <360° erfasst wird, wobei die Magnetfeldquelle als mehrpolig magnetisierter Scheibenmagnet oder Ringmagnet ausgebildet ist.

Eine Ausgestaltung betrifft eine Vorrichtung zur Bestimmung der absoluten Linearposition eines translatorisch beweglichen Elements. Es ist vorgesehen, dass das bewegliche Element linear verschiebbar ist, wobei auf dem beweglichen Element eine ein als mehrpoliger Magnetstreifen ausgeführte Magnetfeldquelle mit Polen gleicher Länge befestigt ist. Hierbei erfassen die magnetosensitiven Sensoren die normal zur Bewegungsrichtung liegende Komponente des Magnetfeldes, wobei der Abstand zwischen den zwei magnetosensitiven Sensoren eines Sensorelements, die Länge der Magnetpole sowie die Position der magnetosensitiven Sensoren relativ zur Magnetfeldquelle so zu wählen ist, dass der sich ergebende Phasenversatz der Sensorsignale eines jeden Sensorelements nicht 180° und nicht 360° beträgt.

In einer Ausgestaltung der Vorrichtung zur Erfassung der absoluten Linearposition ist vorgesehen, dass in einem gemeinsamen Gehäuse, welches stationär beabstandet zur Magnetfeldquelle parallel zur Bewegungsrichtung angebracht ist, zwei Sensorelemente untergebracht sind, welche jeweils zwei in einer Ebene liegende, in Bewegungsrichtung räumlich versetzte magnetosensitive Sensoren mit der dazugehörigen Auswerteelektronik beinhalten und eine Komponente des Magnetfeldes erfassen und auswerten und wobei der unmittelbar absolut messbare Bereich der Länge eines Polpaares der Magnetfeldquelle entspricht.

Die Erfindung betrifft zudem ein Verfahren zur Bestimmung der absoluten Position eines relativ zu magnetosensitiven Sensoren beweglichen Elements mit einer Vorrichtung zur berührungslosen Erfassung eines relativ beweglichen Elements, welches eine auf dem beweglichen Element befestigte Magnetfeldquelle aufweist, wobei ein erstes Sensorelement und ein zweites Sensorelement von der Magnetfeldquelle beabstandet angeordnet ist, wobei in jedem Sensorelement zwei in Richtung der Bewegung räumlich versetzte magnetosensitive Sensoren angeordnet sind. Es ist vorgesehen, dass ein erstes Sensorsignal mit dem ersten magnetosensiviten Sensor eines jeden Sensorelements und ein zweites Sensorsignal mit dem zweiten magnetosensitiven Sensor eines jeden Sensorelements gemessen wird, wobei das erste Sensorsignal und das zweite Sensorsignal eine Komponente des Magnetfeldes repräsentiert und die Sensorsignale einen Phasenversatz $\varphi$ im Bereich von $0° < \varphi < 180°$ oder $180° < \varphi < 360°$ aufweisen, wobei vorgesehen ist,

- dass Amplitudenverhältnisse durch Division eines vorgebbaren Signalhubs durch eine Differenz eines Maximumwertes und eines Minimumwertes der jeweiligen Sensorsignale bestimmt werden,

- dass Offsetwerte um den jeweiligen Nullpunkt der Sensorsignale aus den Minimum- und Maximumwerten der Sensorsignale bestimmt werden,

- dass mittels Subtraktion der Offsetwerte von den Sensorsignalen und durch Normierung mit den Amplitudenverhältnissen normierte Sensorsignale berechnet werden, wobei die Bestimmung der Minimum- und Maximumwerte durch eine relative Bewegung des Elements und der daran befestigten Magnetfeldquelle über einen vollen Bewegungsweg bei gleichzeitiger Erfassung der Sensorsignale beider Sensoren erfolgt,

- dass von den normierten Sensorsignalen ein Summensignal und ein Differenzsignal gebildet werden,

- dass das Summensignal und das Differenzsignal wiederum nach Bestimmung des Amplitudenverhältnisses normiert werden, wobei die Bestimmung der Minimum- und Maximumwerte durch relative Bewegung des Elements und der daran befestigten Magnetfeldquelle über einen vollen Bewegungsweg bei gleichzeitiger Messung des Summensignals sowie des Differenzsignals und Auswertung der Minimum- und Maximumwerte des Summensignals und des Differenzsignals erfolgt und

- dass mittels des normierten Summensignals und des normierten Differenzsignals eine absolute Position der Magnetfeldquelle berechnet wird.

Es ist vorgesehen, dass die Bestimmung der absoluten Position für die Sensorsignale eines jeden Sensorelements redundant durchgeführt wird.

In einer Ausgestaltung des Verfahrens ist vorgesehen, dass es sich bei dem beweglichen Element um ein drehbares Element handelt und eine absolute Drehstellung der Magnetfeldquelle durch Bildung des Arcustangens des Verhältnisses von dem normierten Summensignal und dem normierten Differenzsignal berechnet wird.

In einer Ausgestaltung des Verfahrens ist vorgesehen, dass es sich bei dem beweglichen Element um ein linear verschiebbares Element handelt und eine absolute Linearstellung ermittelt wird.

Die absolute Stellung der Magnetfeldquelle kann mittels eines Algorithmus der Koordinatentransformation, vorzugsweise mit einem CORDIC Algorithmus berechnet werden. Dies trifft sowohl auf die absolute Drehstellung als auch auf die absolute Linearposition zu. Die verschiedenen Konstellationen sind in folgender Tabelle zusammengefasst.

| | Drehwinkel | Lineare Position |
|---|---|---|
| Art des Magneten | 2-oder mehrpolige Scheibe | Mehrpoliger Streifen (n Polpaare) |
| Ausgangssignal elektrisch | 0° bis < 360° per Polpaar | 0° bis < 360° per Polpaar |
| Ausgangssignal mechanisch | 360° dividiert durch Anzahl der Polpaare | 360° entspricht der Länge eines Polpaares |

Bei einer Vorbeifahrt des Magneten am Sensor wird ein Winkel von 0° bis <360° gemessen, sobald der Magnet am Ort des Sensors eine Periode = ein Polpaar (Nord- und Südpol) durchlaufen hat, wobei es irrelevant ist, ob das Signal durch eine Drehbewegung oder eine Linearbewegung entsteht, da am Ort des Sensors in beiden Fällen ein Sinussignal gemessen wird.

Das kann nun also eine volle Umdrehung (0° - <360°) bei einem 2-poligen Scheibenmagneten für Drehwinkelmessung oder eine halbe Umdrehung von 0° - 180° bei einem 4-poligen Scheibenmagneten für Drehwinkelmessung sein.

Analog wird mit einem mehrpoligen Magnetsreifen ebenfalls ein Signal 0° - <360° erzeugt, wenn der Streifen linear über die Länge eines Polpaares bewegt wird, bspw. bei einer Pollänge von 2mm, hat ein Polpaar die Länge von 4mm. Damit entspricht ein Messergebnis von 0° der Position 0mm und ein Messergebnis von <360° (359, 99999...°) entspricht der Länge von 4mm (= der Länge eines Polpaares). Danach wiederholt sich der Vorgang. Mithin kann nur innerhalb eines Polpaares die absolute Position bestimmt werden. Um über die Länge eines Polpaares hinaus eine absolute Position zu bestimmen, müssen die Anzahl der durchlaufenen Polpaare mitgezählt werden:
Im obigen Beispiel entspräche dann eine Anzeige von 180° einem Weg von 2mm, 6mm, 10mm, 14mm, usw...

Die Positionen können nur unterschieden werden, indem ausgehend von Position 0mm die durchlaufenen Polpaare mitgezählt werden:

Anzeige = 180°, 0 durchlaufene Polpaare = zurückgelegte Wegstrecke = 2mm
Anzeige = 180°, 1 durchlaufenes Polpaar (4mm) = zurückgelegte Wegstrecke = 2mm + 4mm = 6mm
Anzeige = 180°, 2 durchlaufene Polpaare (2x 4mm) = zurückgelegte Wegstrecke = 2mm + 8mm = 10mm

Die Erfindung wird nun anhand von Ausführungsformen und dazugehöriger Figuren weiter erläutert. Es zeigen:

Fig. 1 den Aufbau zweier Sensorelemente in vertikaler Anordnung,

Fig. 2 den Aufbau zweier Sensorelemente in paralleler Anordnung,

Fig. 3 eine nicht redundante Anordnung für die Messung einer Drehstellung mit axialem Aufbau,

Fig. 4 eine Draufsicht der in Fig. 3 gezeigten Anordnung,

Fig. 5 - Fig. 8 verschiedene Ausführungsformen von geeigneten Magnetfeldquellen,

Fig. 9 eine Anordnung für die redundante Messung einer Drehstellung mit axialem Aufbau,

Fig. 10 - 13 Draufsichten verschiedener Ausführungsformen der in Fig. 9 gezeigten Anordnung,

Fig. 14 ein analoges Blockschaltbild der Signalverarbeitung,

Fig. 15 ein digitales Blockschaltbild der Signalverarbeitung,

Fig. 16 bis Fig. 20 Signalverläufe,

Fig. 21 eine Anordnung für die redundante Messung einer Drehstellung mit radialem Aufbau für Off-Axis Anwendungen,

Fig. 22 eine Draufsicht von Fig. 21,

Fig. 23 eine nicht redundante Anordnung mit einem linear beweglichen Element, und

Fig. 24 die Anordnung von Fig. 3 in redundanter Ausführung zur redundanten Positionsbestimmung.

Fig. 1 zeigt den Aufbau der beiden Sensorelemente 3a, 3b im gemeinsamen Gehäuse 4: die Sensorelemente 3a und 3b sind identisch und enthalten je zwei magnetosensitive Sensoren in Form von Hallsensoren 1a, 2a sowie 1b, 2b. Zusätzlich ist jeweils auch die Elektronik für die Signalverarbeitung auf dem Sensorelement integriert. Die beiden Sensorelemente 3a, 3b sind hier zueinander um 180° gedreht. Die dadurch entstehenden Messergebnisse sind relativ zueinander gegenläufig und müssen bei der Auswertung in einer externen Recheneinheit entsprechend beachtet werden. Dieser Aufbau kann die elektrische Verbindung zwischen dem Sensorelement und den elektrischen Anschlüssen des Gehäuses vereinfachen, wenn sich z.B. die elektrischen Anschlüsse des Sensorelements nur auf einer Längsseite des Sensorelements befinden, welche dann den entsprechenden Kontaktreihen des Sensorgehäuses direkt zugewandt sind.

In Fig. 2 sind die beiden Sensorelemente parallel zueinander angeordnet. In dieser Ausführung sind die entstehenden Messergebnisse relativ zueinander gleichläufig.

Fig. 3 zeigt eine nicht redundante Anordnung, in der sich die magnetosensitiven Sensoren unterhalb der Magnetfeldquelle befinden. Die für die Messung des Magnetfeldes empfindlichen Achsen der auf einem gemeinsamen Substrat 5 integrierten Hallelemente 1,2 sind als Pfeile dargestellt.

Fig. 4 zeigt eine Draufsicht der in Fig. 3 beschriebenen Anordnung.

Fig. 5 - Fig. 8 zeigen verschiedene Ausführungsformen von geeigneten Magnetfeldquellen:

Fig. 5 und Fig. 6 zeigen einen 2-polig diametral magnetisierten Scheibenmagnet 7 bzw. Ringmagnet 9, mit welchen eine Bestimmung der absoluten Drehstellung über 360° möglich ist.

Fig. 7 und Fig. 8 zeigen einen mehrpolig magnetisierten Scheibenmagnet 8 bzw. Ringmagnet 10. Die hier gezeigten Darstellungen zeigen eine Ausführung mit 4 Polen, die Anwendung der Erfindung ist aber nicht auf diese Polzahl limitiert, sondern gilt für eine beliebige Anzahl von Polpaaren. Der maximal absolut messbare Drehstellungsbereich in diesen Ausführungen beträgt 360°/pp, wobei pp der Polpaarzahl der Magnete entspricht. Bei Verwendung dieser Magnetfeldquellen

Fig. 9 zeigt eine Ausführungsform für redundante Messung einer Drehstellung mit axialem Aufbau. Ein um eine Drehachse 14 drehbar gelagertes Objekt 6 enthält eine mit diesem verbundene Magnetfeldquelle 7, dessen axiales Magnetfeld Bz mittels zwei Sensorsystemen 3a, 3b gemessen und ausgewertet wird.

Die für die Messung der Magnetfelder empfindlichen Achsen der integrierten Hallsensoren sind in Form von Pfeilen dargestellt.

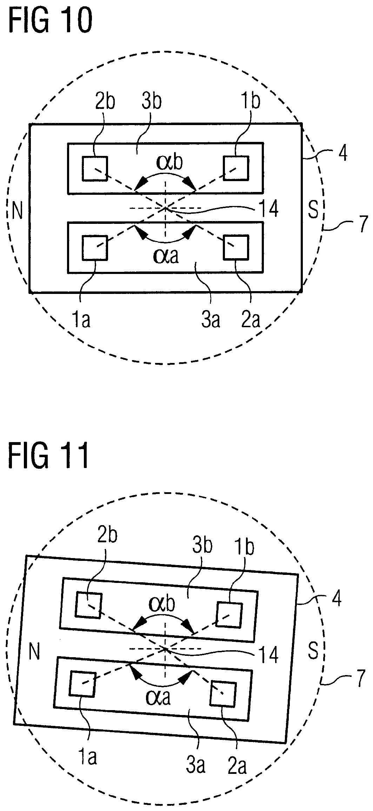

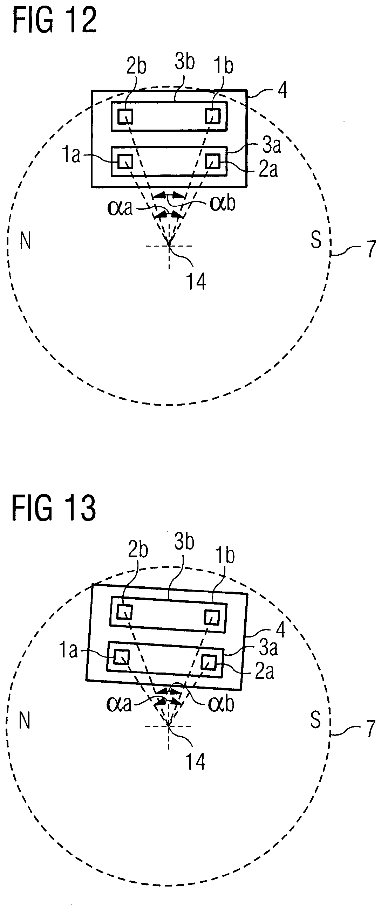

Fig. 10 zeigt eine Draufsicht eines Aufbaus nach der axialen Ausführungsform von Fig. 9. Bei diesem Aufbau ist zu beachten, dass die Drehachse 14 außerhalb der direkten Verbindung der Sensoren 1a→2a und 1b→2b liegen muss und somit der Winkel der Sensoren relativ zur Drehachse $\alpha a$ und $\alpha b$ nicht 180° beträgt. Eine genaue Zentrierung der Sensoren zur Drehachse ($\alpha a = \alpha b$) ist jedoch nicht erforderlich, da diese Zentrierungstoleranzen durch eine Referenzfahrt nach dem Zusammenbau des Sensorsystems kompensiert werden können. Ein Beispiel für eine derartige Dejustage ist in Fig. 13 dargestellt.

Fig. 12 zeigt eine Ausführungsform, wie sie für größere Magnetdurchmesser oder Ringmagnete verwendet werden kann. Das Sensorsystem wird außermittig zur Drehachse 14 angebracht. Mit diesem Aufbau ist ebenfalls eine absolute Drehwinkelbestimmung über 360° möglich. Das axiale Magnetfeld Bz wird mit den magnetosensitiven Sensoren in Form von Hallsensoren 1a und 2a bzw. 1b und 2b an verschiedenen Radien der Magnetfeldquelle abgenommen, wodurch sich unterschiedliche Winkel $\alpha a \neq \alpha b$ relativ zur Drehachse und somit auch unterschiedliche Phasenwinkel der Sensorsignale in beiden Sensorsystemen 3a, 3b ergeben. Diese unterschiedlichen Phasenwinkel können jedoch durch eine Referenzfahrt nach dem Zusammenbau des Sensorsystems erkannt und kompensiert werden.

In Fig. 13 sind die Sensoren relativ zur Drehachse tangential versetzt, sowie relativ zu ihrem Mittelpunkt verdreht. Eine derartige Dejustage kann ebenfalls nach dem Zusammenbau des Sensorsystems durch eine Referenzfahrt kompensiert werden.

Im Folgenden wird das zugehörige Verfahren erläutert.

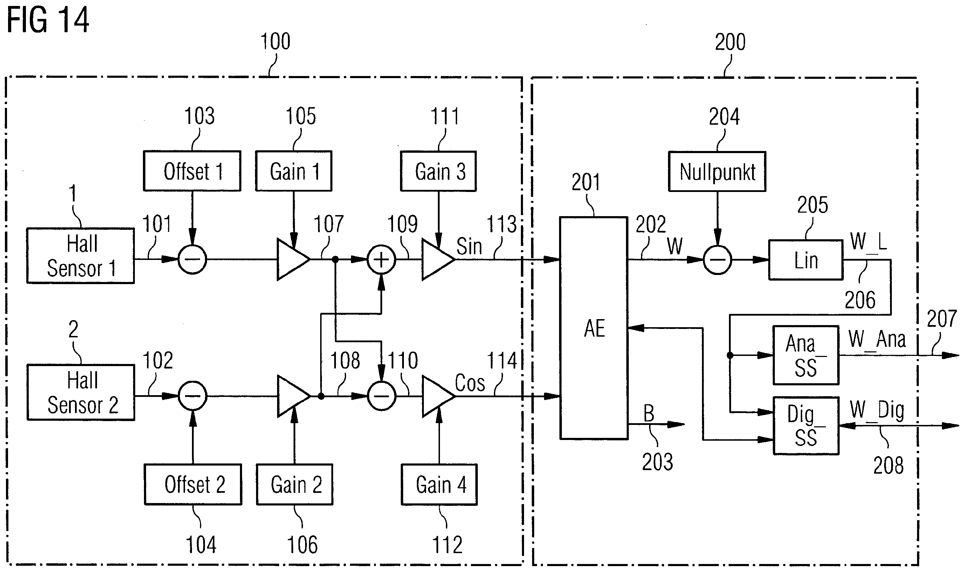

In Fig. 14 ist der analoge Signalverarbeitungspfad in Block 100 dargestellt und der digitale Signalverarbeitungspfad in Block 200 dargestellt.

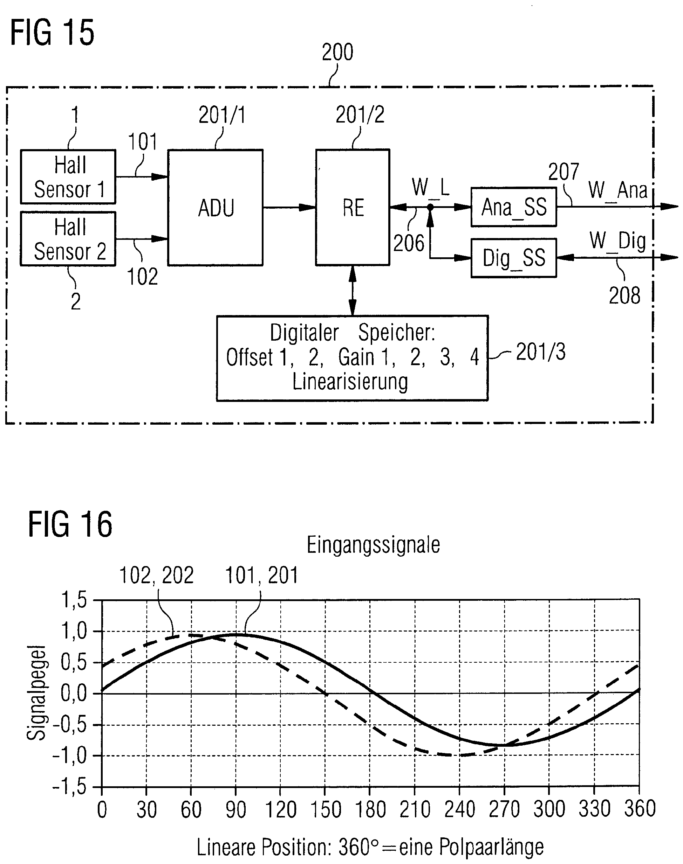

Im Ausführungsbeispiel wie Fig. 16 gezeigt, wird angenommen, dass die gemessenen Signale der magnetosensitiven Sensoren in Form von Hallsensoren 1, 2 eine Phasenlage von 30° besitzen, bereits vorverstärkt und aufgrund von Einflüssen der Positionierungsgenauigkeit sowie aufgrund von prozesstechnischen Toleranzen sowohl mit Offsetspannungen als auch mit unterschiedlichen Signalpegeln behaftet sind.

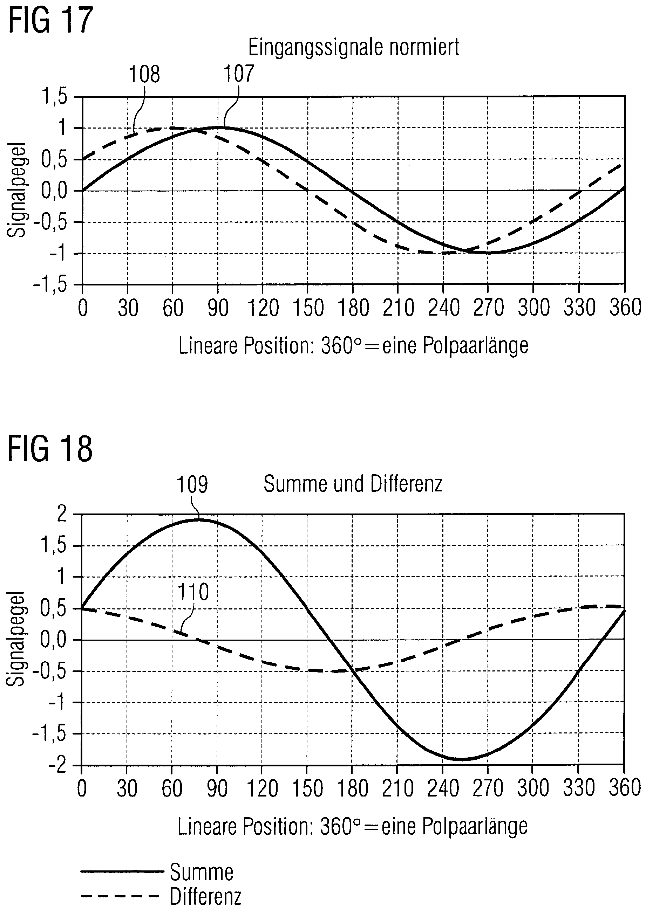

In einem ersten Schritt wird die Offsetspannung der Sensorsignale 101, 102 subtrahiert und die Signalpegel auf einen normierten Signalhub (beispielsweise $2V_{ss}$) angeglichen. Die normierten Signalpegel stehen als Signal 111 und 112 zur Verfügung und sind in Fig. 17 dargestellt.

Um die erforderlichen Trimmwerte für Offset1, Offset2, Gain1 und Gain2 zu errechnen ist es ausreichend, die Minimum - sowie Maximumwerte der Sensorsignale 101, 102 zu ermitteln. Dies kann durch einfache Drehung der Magnetfeldquelle bei gleichzeitiger Ermittlung der Minimum- und Maximumwerte der Sensorsignale 101 und 102 geschehen.

Aus den Minimum- und Maximumwerten können dann die für die Trimmung notwendigen Werte folgendermaßen errechnet werden:

$$Offset1 = \frac{H1_{\max} + H1_{\min}}{2} \quad [1]$$

$$Offset2 = \frac{H2_{\max} + H2_{\min}}{2} \quad [2]$$

$$Gain1 = \frac{normierter_Signalhub}{H1_{\max} - H1_{\min}} \quad [3]$$

$$Gain2 = \frac{normierter_Signalhub}{H2_{\max} - H2_{\min}} \quad [4]$$

für $H1_{max,min}$ = Maximum- bzw. Minimumwert von Sensorsignal1 101
$H2_{max,min}$ = Maximum- bzw. Minimumwert von Sensorsignal2 102

Von diesen normierten Signalen wird im nächsten Schritt die Summe 109 und die Differenz 110 gebildet. In Fig. 18 sind diese Signale dargestellt.

Das Verhältnis des Signalhubs von Summensignal zu Differenzsignal hängt von der Phasenlage $\varphi$ der Eingangssignale 101, 102 ab. Die Phasenlage $\varphi$ von Summensignal zu Differenzsignal beträgt jedoch immer 90°. Eine Ausnahme bilden die Sonderfälle der Phasenlagen $\varphi$ = 360° = 0° sowie $\varphi$ = 180°, bei welchen eine Bestimmung der Drehlage nicht möglich ist, da bei $\varphi$ = 180° das Summensignal zu 0 wird und bei $\varphi$ = 360° = 0° das Differenzsignal zu 0 wird.

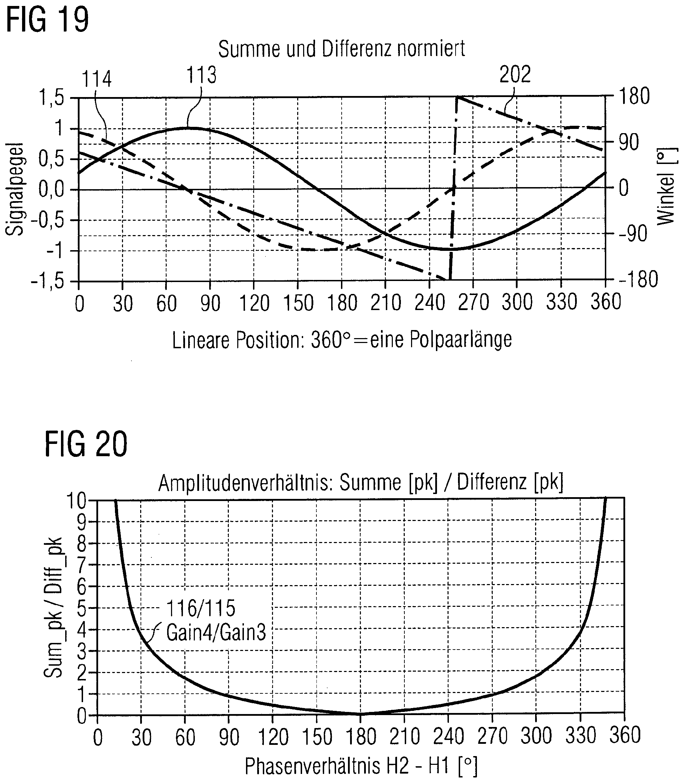

In Fig. 20 ist diese Relation grafisch dargestellt. Die X-Achse zeigt das Phasenverhältnis der Eingangssignale 101, 102 und die Y-Achse zeigt das Amplitudenverhältnis der Scheitelwerte von normiertem Summensignal zu normiertem Differenzsignal.

Der mathematische Zusammenhang der Scheitelwerte von Summensignal durch $\text{Differenzsignal} = \frac{\hat{S}}{\hat{D}}$ zu Phasenlage errechnet sich aus:

$$\frac{\hat{S}}{\hat{D}} = \frac{1}{\tan\left(\frac{\varphi}{2}\right)} \quad \text{für } 0° < \varphi < 180° \qquad [5]$$

$$\frac{\hat{S}}{\hat{D}} = \frac{-1}{\tan\left(\frac{\varphi}{2}\right)} \quad \text{für } 180° < \varphi < 360° \qquad [6]$$

In einem weiteren Schritt werden das Summensignal 109 und das Differenzsignal 110 wiederum auf einen vorgegebenen Wert, beispielsweise $2V_{ss}$ normiert, wie in Fig. 19 dargestellt.

Um die erforderlichen Trimmwerte für Gain3 und Gain4 zu errechnen ist es ausreichend, die Minimum - sowie Maximumwerte des Summen- und Differenzsignals zu ermitteln. Dies kann durch einfache Drehung der Magnetfeldquelle 7,8,9,10 (Fig. 4 - Fig. 8) über eine volle Periode bei gleichzeitiger Ermittlung der Minimum- und Maximumwerte von Summen- und Differenzsignal geschehen.

Aus den Minimum- und Maximumwerten können dann die für die Trimmung notwendigen Werte folgendermaßen errechnet werden:

$$Gain3 = \frac{normierter_Signalhub}{Summensignal_{\max} - Summensignal_{\min}} \qquad [7]$$

$$Gain4 = \frac{normierter_Signalhub}{Differenzsignal_{\max} - Differenzsignal_{\min}} \qquad [8]$$

Geht man davon aus, dass die normierten Sensorsignale 107,108 einer reinen Sinusform entsprechen und keine Offsetspannung mehr aufweisen, so entsteht durch die Summen- und Differenzbildung ebenfalls kein zusätzlicher Offset. Dies kann mittels der Minimum- und Maximumwerte von Summen- und Differenzsignal überprüft und gegebenenfalls auch korrigiert werden:

$$Offset_{Summensignal} = \frac{Summensignal_{\max} + Summensignal_{\min}}{2} \qquad [9]$$

$$Offset_{Differenzsignal} = \frac{Differenzsignal_{\max} + Differenzsignalsignal_{\min}}{2} \qquad [10]$$

Die normierten Signale des Summensignals 113 und des Differenzsignals 114 ergeben somit zwei um exakt 90° phasenverschobene Signale mit gleichem Signalhub. Diese Signale werden nun zur Errechnung der Stellung unmittelbar herangezogen, siehe Fig. 19.

In weiterer Folge werden das normierte Summensignal 113 mit Vsin und das normierte Differenzsignal 114 mit Vcos beschrieben.

$$Vsin = Gain3*[Gain1*(H1-Offset1)+Gain2*(H2 - Offset2)] \qquad [11]$$

$$Vcos = Gain4*[Gain1*(H1-Offset1)-Gain2*(H2 - Offset2)] \quad [12]$$

Für H1 = Sensorsignal von Hallsensor1 101
H2 = Sensorsignal von Hallsensor2 102
Offset1 = Offsetsignal von Hallsensor1 103
Offset2 = Offsetsignal von Hallsensor2 104
Gain1= Verstärkung des Sensorsignals H1 105
Gain2= Verstärkung des Sensorsignals H2 106
Gain3= Verstärkung des Summensignals 111
Gain4= Verstärkung des Differenzsignals 112

Ausgehend von den Signalen Vsin 113 und Vcos 114 kann die absolute Stellung W 202 der Magnetfeldquelle mit Hilfe der Arkustangensfunktion

$$W = \arctan \frac{V \sin}{V \cos} \quad [13]$$

oder anderen geeigneten Mitteln der Koordinatentransformation, wie etwa einem digitalen CORDIC Algorithmus ermittelt werden.

Der Betragswert B 203 der Koordinatentransformation ist für alle Stellungen konstant und beträgt:

$$B = \sqrt{V \sin^2 + V \cos^2} = konst. \quad [14]$$

Fig.19 zeigt das normierte Summensignal 113 = Vsin, sowie das normierte Differenzsignal 114 = Vcos. Weiterhin wird in einer zweiten Ordinatenachse die aus Vsin und Vcos errechnete absolute Drehstellung 202 in einer Skalierung von +/- 180° dargestellt.

In vielen Anwendungen kann es sinnvoll sein, die errechnete Drehstellung mit einer definierten mechanischen Position des beweglichen Elements 6 in Einklang zu bringen, beispielsweise die Nullstellung eines Drehstellers. Um dies zu erleichtern, kann eine beliebige Drehstellung durch Subtraktion eines Null-Referenzwertes 204 zu Null gesetzt werden.

Weiterhin kann die erzielte Genauigkeit der angezeigten Drehstellung optional durch eine Linearisierungsschaltung 205 erhöht werden. Übliche Formen der Linearisierung sind Tabellen oder mathematische Korrekturfunktionen welche die errechnete Stellung an vom Anwender definierte Referenzpunkte anzugleichen versuchen.

In weiterer Folge kann die errechnete und linearisierte Drehstellung W_L durch Konvertierung in eine analoge Signalform 207 oder eine digitale Signalform 208 dem Anwender zur Verfügung gestellt werden.

In einer vorteilhaften Ausführungsform kann, wie in Fig. 15 gezeigt, die Signalverarbeitung auf digitalem Wege durchgeführt werden. Die von den magnetosensitiven Sensoren 1,2 generierten Signale 101, 102 werden unmittelbar mittels eines Analog-Digital-Umsetzers 201/1 in eine digitale Signalform umgewandelt und die unter Fig. 14, Block 100 beschriebenen Signalverarbeitungsschritte werden in einer digitalen Recheneinheit durchgeführt. Die dafür notwendigen Parameter für Verstärkung, Offset, Nullpunkt und Linearisierung können in einem digitalen Speicher hinterlegt werden.

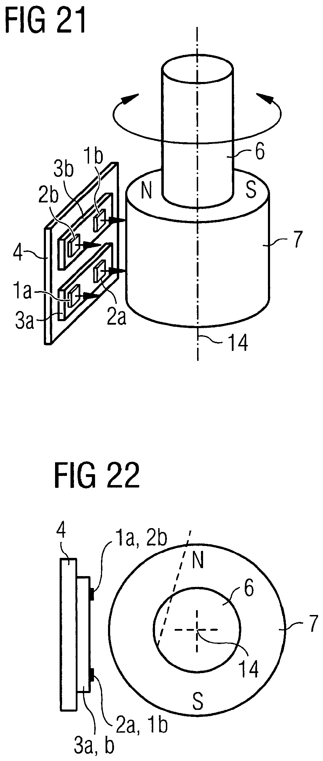

Fig. 21 zeigt eine Ausführungsform der Vorrichtung für eine redundante Messung einer Drehstellung mit radialem Aufbau für Off-Axis Anwendungen. Ein um eine Drehachse 14 drehbar gelagertes Objekt 6 enthält eine mit diesem verbundene Magnetfeldquelle in Form eines 2-polig diametral magnetisierter Scheibenmagneten 7, dessen radiales Feld mittels zwei Sensorelementen 3a, 3b gemessen und ausgewertet wird.

Die für die Messung der Magnetfelder empfindlichen Achsen der integrierten Hallsensoren sind in Form von Pfeilen dargestellt.

Eine absolute Veränderung der Magnetfeldstärke hat, wie sie z.B. bei Änderung der Temperatur des Magneten auftritt, keinen Einfluss auf die Genauigkeit des Messprinzips, da die Auswertung der gemessenen Signale ratiometrisch erfolgt und sich somit Änderungen in der Signalamplitude, sofern sie auf alle Hallsensoren gleichermaßen einwirken, kompensieren.

Im Fall von Fig. 21 gilt dies auch, wenn sich das drehbare Element 6 mit der daran angebrachten Magnetfeldquelle in axialer Richtung verschiebt. Durch die axiale Verschiebung können unterschiedliche Signalamplituden in den vier magnetosensitiven Sensoren in Form von Hallsensoren entstehen, jedoch wirkt diese Signalveränderung auf alle Hallsensoren in gleicher Weise und wird somit kompensiert.

Der Vorteil dieser Ausführungsform liegt insbesondere in einer großen Toleranz gegenüber axialen Verschiebungen der drehbar gelagerten Teile 6,7.

Des Weiteren ist diese Ausführungsform auch für Ringmagnete und Hohlwellen geeignet, da das Magnetfeld der Magnetfeldquelle an dessen Umfang gemessen wird.

Fig. 22 zeigt eine Draufsicht von Fig. 21. Eine exakte Zentrierung der Sensorelemente 3a, 3b zur Drehachse 14 ist nicht erforderlich, da diese Toleranzen durch eine Referenzfahrt nach dem Zusammenbau des Sensorsystems kompensiert werden können.

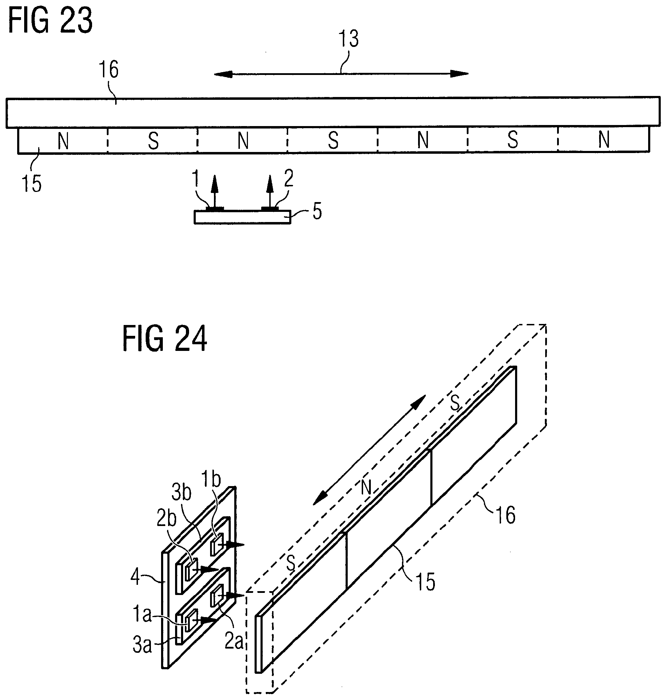

Fig. 23 zeigt eine Anordnung mit einem linear beweglichen Element. Auf einem entlang einer Achse 13 linear bewegten Element 16 ist ein mehrpoliger Magnetstreifen 15 angebracht, dessen normal zur Bewegungsrichtung liegendes Feld Bz von zwei unterhalb des Magnetstreifens 15 angebrachten magnetosensitiven Sensoren in Form von Hallsensoren 1,2 gemessen wird. Die für die Messung des Magnetfeldes empfindlichen Achsen der auf einem gemeinsamen Substrat 5 integrierten Hallsensoren 1,2 sind als Pfeile dargestellt. Das bei Bewegung des Magnetstreifens 15 von den Hallsensoren 1,2 gemessene Magnetfeld hat einen sinusförmigen Verlauf, wobei die von den Hallsensoren gemessenen Signale 101, 102 einen Phasenversatz zueinander aufweisen. Die Länge der Pole des Magneten kann in einem weiten Bereich variiert werden, es ist jedoch darauf zu achten, dass der Phasenversatz der beiden Sensorsignale nicht 180° und nicht 360° beträgt. Ein Phasenversatz von 180° entsteht, wenn der Abstand der Hallsensoren in Bewegungsrichtung gleich der Länge eines Poles des Magnetstreifens ist. Ein Phasenversatz von 360° entsteht, wenn der Abstand der Hallsensoren in Bewegungsrichtung gleich der Länge eines Polpaares des Magnetstreifens bzw. ein ganzzahliges Vielfaches davon ist.

Fig. 24 zeigt das Sensorsystem mit einem mehrpoligen Magnetstreifen 15 zur redundanten Positionsbestimmung eines linear bewegten Objekts 16. Eine absolute lineare Position kann über eine Länge bestimmt werden, welche der Länge eines Polpaares entspricht. Die Länge der Polpaare der Magnetfeldquelle in Form eines mehrpoligen Magnetsteifens 18 bzw. der Abstand der magnetosensitiver Sensoren in Bewegungsrichtung zueinander sollte so gewählt werden, dass der sich daraus ergebende Phasenversatz nicht 180° und nicht 360° beträgt.

Für die Bestimmung der absoluten Linearposition kommt dasselbe Verfahren zum Einsatz wie zur Bestimmung der absoluten Drehstellung wie in obiger Tabelle beschrieben.

## Patentansprüche

1. Vorrichtung zur berührungslosen Erfassung der absoluten Position eines relativ zu magnetosensitiven Sensoren beweglichen Elements, welches eine auf dem beweglichen Element (6) befestigte Magnetfeldquelle aufweist, umfassend das bewegliche Element und zwei in einer Ebene liegende, in Richtung der Bewegung räumlich versetzte magnetosensitive Sensoren (1,2), die von der Magnetfeldquelle (15) derart beabstandet angeordnet sind, dass ein erstes Sensorsignal (101) mit dem ersten magnetosensitiven Sensor und ein zweites Sensorsignal (102) mit dem zweiten magnetosensitiven Sensor messbar ist, wobei das erste Sensorsignal (101) und das zweite Sensorsignal (102) eine Komponente des Magnetfeldes repräsentiert und die Sensorsignale (101,102) einen Phasenversatz $\varphi$ im Bereich von $0° < \varphi < 180°$ oder $180° < \varphi < 360°$ aufweisen wobei die Vorrichtung derart redundant ausgeführt ist, dass diese zwei Sensorelemente (3a, 3b) aufweist, wobei in jedem Sensorelement (3a, 3b) zwei derartige magnetosensitive Sensoren (1,2) angeordnet sind; die magnetosensitiven Sensoren (1,2) und die Sensorelemente (3a,3b) gemeinsam auf einem Sensorchip integriert sind,
   **dadurch gekennzeichnet, dass**
   die Vorrichtung ferner eine Auswerteelektronik umfasst, die konfiguriert ist, aus den Sensorsignalen eines Sensorelements eine absolute Position der Magnetfeldquelle unter Verwendung eines normierten Summensignals und eines normierten Differenzsignals zu berechnen, wobei das Summensignal aus der Summe der beiden Sensorsignale und das Differenzsignal aus der Differenz der beiden Sensorsignale gebildet wird und wobei die absolute Position für jedes Sensorelement aus den Sensorsignalen des Sensorelements redundant bestimmt wird.

2. Vorrichtung nach Anspruch 1, **dadurch gekennzeichnet, dass** das bewegliche Element drehbar gelagert ist, dass die Ebene parallel zur Drehachse angeordnet ist und dass in einem gemeinsamen Gehäuse (4), welches seitlich der Magnetfeldquelle parallel zur Drehachse stationär angebracht ist, die zwei Sensorelemente (3a,3b) untergebracht sind, welche jeweils zwei in einer Ebene liegende, in Richtung der Drehbewegung räumlich versetzte magnetosensitive Sensoren (1a,2a) und (1b,2b) mit der dazugehörigen Auswerteelektronik beinhalten und die radiale Komponente des Magnetfeldes erfassen und auswerten.

3. Vorrichtung nach Anspruch 2, **dadurch gekennzeichnet, dass** das bewegliche Element drehbar gelagert ist, dass die Ebene normal zur Drehachse angeordnet ist und dass in einem gemeinsamen Gehäuse (4), welches parallel zur Ebene stationär angebracht ist, die zwei Sensorelemente (3a,3b) untergebracht sind, welche jeweils zwei in einer Ebene liegende, in Richtung der Drehbewegung räumlich versetzte magnetosensitive Sensoren (1a,2a) und (1b,2b) mit der dazugehörigen Auswerteelektronik beinhalten und die axiale Komponente des Magnetfeldes erfassen und auswerten.

**4.** Vorrichtung nach Anspruch 3, **dadurch gekennzeichnet, dass** die magnetosensitiven Sensoren äquidistant und symmetrisch um die Drehachse in dem gemeinsamen Gehäuse (4) angeordnet sind.

**5.** Vorrichtung nach einem der Ansprüche 2 bis 4, **dadurch gekennzeichnet, dass** die absolute Drehstellung über einen Winkelbereich von 360° erfasst wird, wobei die Magnetfeldquelle als 2-polig diametral magnetisierter Scheibenmagnet (7) oder Ringmagnet (9) ausgebildet ist.

**6.** Vorrichtung nach einem der Ansprüche 2 bis 4, **dadurch gekennzeichnet, dass** die absolute Drehstellung über einen Winkelbereich von <360° erfasst wird, wobei die Magnetfeldquelle als mehrpolig magnetisierter Scheibenmagnet (8) oder Ringmagnet (10) ausgebildet ist.

**7.** Vorrichtung nach Anspruch 1, **dadurch gekennzeichnet, dass** das relativ bewegliche Element linear verschiebbar ist, wobei auf dem relativ beweglichen Element eine als mehrpoliger Magnetstreifen ausgeführte Magnetfeldquelle mit Polen gleicher Länge befestigt ist, dass die magnetosensitiven Sensoren die magnetische Komponente normal zur Bewegungsrichtung erfassen, wobei der Abstand zwischen den zwei magnetosensitiven Sensoren eines Sensorelements, die Länge der Magnetpole sowie die Position der magnetosensitiven Sensoren relativ zur Magnetfeldquelle so zu wählen ist, dass der sich ergebende Phasenversatz der Sensorsignale eines jeden Sensorelements nicht 180° und nicht 360° beträgt.

**8.** Vorrichtung nach Anspruch 7, **dadurch gekennzeichnet, dass** in einem gemeinsamen Gehäuse (4), welches stationär beabstandet zur Magnetfeldquelle (15) parallel zur Bewegungsrichtung angebracht ist, zwei Sensorelemente (3a,3b) untergebracht sind, welche jeweils zwei in einer Ebene liegende, in Bewegungsrichtung räumlich versetzte magnetosensitive Sensoren (1a,2a) bzw. (1b,2b) mit der dazugehörigen Auswerteelektronik beinhalten und eine Komponente des Magnetfeldes erfassen und auswerten und wobei der unmittelbar absolut messbare Bereich der Länge eines Polpaares der Magnetfeldquelle (15) entspricht.

**9.** Verfahren zur Bestimmung der absoluten Position eines relativ zu magnetosensitiven Sensoren beweglichen Elements mit einer Vorrichtung zur berührungslosen Erfassung eines relativ beweglichen Elements, welches eine auf dem beweglichen Element (6) befestigte Magnetfeldquelle aufweist, wobei ein erstes Sensorelement und ein zweites Sensorelement von der Magnetfeldquelle beabstandet angeordnet ist, wobei in jedem Sensorelement zwei in Richtung der Bewegung räumlich versetzte magnetosensitive Sensoren (1,2) angeordnet sind, wobei vorgesehen ist, dass ein erstes Sensorsignal (101) mit dem ersten magnetosensiviten Sensor eines jeden Sensorelements und ein zweites Sensorsignal (102) mit dem zweiten magnetosensitiven Sensor eines jeden Sensorelements gemessen wird, wobei das erste Sensorsignal (101) und das zweite Sensorsignal (102) eine Komponente des Magnetfeldes repräsentiert und die Sensorsignale (101,102) einen Phasenversatz $\varphi$ im Bereich von $0° < \varphi < 180°$ oder $180° < \varphi < 360°$ aufweisen, wobei vorgesehen ist,

- dass Amplitudenverhältnisse durch Division eines vorgebbaren Signalhubs durch eine Differenz eines Maximumwertes und eines Minimumwertes der jeweiligen Sensorsignale (101,102) bestimmt werden,
- dass Offsetwerte (103,104) um den jeweiligen Nullpunkt der Sensorsignale (101,102) aus den Minimum- und Maximumwerten der Sensorsignale (101,102) bestimmt werden,
- dass mittels Subtraktion der Offsetwerte von den Sensorsignalen (101,102) und durch Normierung mit den Amplitudenverhältnissen normierte Sensorsignale (107,108) berechnet werden, wobei die Bestimmung der Minimum- und Maximumwerte durch eine relative Bewegung des Elements und der daran befestigten Magnetfeldquelle über einen vollen Bewegungsweg bei gleichzeitiger Erfassung der Sensorsignale (101,102) beider Sensoren (1,2) erfolgt,
- dass von den normierten Sensorsignalen (107,108) ein Summensignal (109) und ein Differenzsignal (110) gebildet werden,

**dadurch gekennzeichnet, dass**
dass das Summensignal (109) und das Differenzsignal (110) wiederum nach Bestimmung des Amplitudenverhältnisses normiert werden (113,114), wobei die Bestimmung der Minimum-und Maximumwerte durch relative Bewegung des Elements und der daran befestigten Magnetfeldquelle über einen vollen Bewegungsweg bei gleichzeitiger Messung des Summensignals (109) sowie des Differenzsignals (110) und Auswertung der Minimum- und Maximumwerte des Summensignals (109) und des Differenzsignals (110) erfolgt und

- dass mittels des normierten Summensignals (113) und des normierten Differenzsignals (114) eine absolute Position (202) der Magnetfeldquelle berechnet wird, wobei die Bestimmung der absoluten Position für die Sensorsignale eines jeden Sensorelements redundant durchgeführt wird.

**10.** Verfahren nach Anspruch 9, **dadurch gekennzeichnet, dass** es sich bei dem beweglichen Element um ein drehbares Element handelt und eine absolute Drehstellung (202) der Magnetfeldquelle berechnet wird.

**11.** Verfahren nach Anspruch 10, **dadurch gekennzeichnet, dass** die absolute Drehstellung durch Bildung des Arcustangens des Verhältnisses von dem normierten Summensignal (113) und dem normierten Differenzsignal (114) berechnet wird.

**12.** Verfahren nach Anspruch 9, **dadurch gekennzeichnet, dass** es sich bei dem beweglichen Element um ein linear verschiebbares Element handelt und eine absolute Linearstellung ermittelt wird.

**13.** Verfahren nach Anspruch 10 oder 12, **dadurch gekennzeichnet, dass** die absolute Stellung der Magnetfeldquelle mittels eines Algorithmus der Koordinatentransformation, vorzugsweise mit einem CORDIC Algorithmus berechnet wird.

## Claims

**1.** Apparatus for contactlessly detecting the absolute position of an element which is movable relative to magnetosensitive sensors and has a magnetic field source fastened on the movable element (6), comprising the movable element and two magnetosensitive sensors (1, 2) which are in one plane, are spatially offset in the direction of movement and are arranged at a distance from the magnetic field source (15) in such a manner that a first sensor signal (101) can be measured using the first magnetosensitive sensor and a second sensor signal (102) can be measured using the second magnetosensitive sensor, the first sensor signal (101) and the second sensor signal (102) representing a component of the magnetic field and the sensor signals (101, 102) having a phase offset $\varphi$ in the range of $0° < \varphi < 180°$ or $180° < \varphi < 360°$, the apparatus having a redundant design such that it has two sensor elements (3a, 3b), two such magnetosensitive sensors (1, 2) being arranged in each sensor element (3a, 3b), and the magnetosensitive sensors (1, 2) and the sensor elements (3a, 3b) being integrated together on a sensor chip, **characterized in that** the apparatus also comprises evaluation electronics which are configured to calculate an absolute position of the magnetic field source from the sensor signals from a sensor element using a normalized sum signal and a normalized difference signal, the sum signal being formed from the sum of the two sensor signals, and the difference signal being formed from the difference between the two sensor signals, and the absolute position being redundantly determined for each sensor element from the sensor signals from the sensor element.

**2.** Apparatus according to Claim 1, **characterized in that** the movable element is rotatably mounted, **in that** the plane is arranged parallel to the axis of rotation, and **in that** the two sensor elements (3a, 3b) are accommodated in a common housing (4) which is fitted in a stationary manner to the side of the magnetic field source parallel to the axis of rotation, which sensor elements each comprise two magnetosensitive sensors (1a, 2a) and (1b, 2b), which are in one plane and are spatially offset in the direction of rotational movement, with the associated evaluation electronics and detect and evaluate the radial component of the magnetic field.

**3.** Apparatus according to Claim 2, **characterized in that** the movable element is rotatably mounted, **in that** the plane is arranged normal to the axis of rotation, and **in that** the two sensor elements (3a, 3b) are accommodated in a common housing (4) which is fitted in a stationary manner parallel to the plane, which sensor elements each comprise two magnetosensitive sensors (1a, 2a) and (1b, 2b), which are in one plane and are spatially offset in the direction of rotational movement, with the associated evaluation electronics and detect and evaluate the axial component of the magnetic field.

**4.** Apparatus according to Claim 3, **characterized in that** the magnetosensitive sensors are arranged equidistantly and symmetrically around the axis of rotation in the common housing (4).

**5.** Apparatus according to one of Claims 2 to 4, **characterized in that** the absolute rotational position is detected over an angular range of 360°, the magnetic field source being in the form of a disk magnet (7) or a ring magnet (9) with two-pole diametric magnetization.

6. Apparatus according to one of Claims 2 to 4, **characterized in that** the absolute rotational position is detected over an angular range of <360°, the magnetic field source being in the form of a disk magnet (8) or a ring magnet (10) with multi-pole magnetization.

7. Apparatus according to Claim 1, **characterized in that** the element which is movable relatively is linearly displaceable, a magnetic field source which is in the form of a multi-pole magnetic strip and has poles of equal length being fastened on the element which is movable relatively, **in that** the magnetosensitive sensors detect the magnetic component normal to the direction of movement, in which case the distance between the two magnetosensitive sensors of a sensor element, the length of the magnet poles and the position of the magnetosensitive sensors relative to the magnetic field source should be selected in such a manner that the resulting phase offset of the sensor signals from each sensor element is not 180° and is not 360°.

8. Apparatus according to Claim 7, **characterized in that** two sensor elements (3a, 3b) are accommodated in a common housing (4) which is fitted in a stationary manner at a distance from the magnetic field source (15) parallel to the direction of movement, which sensor elements each comprise two magnetosensitive sensors (1a, 2a) and (1b, 2b), which are in one plane and are spatially offset in the direction of movement, with the associated evaluation electronics and detect and evaluate a component of the magnetic field, the range which can be immediately measured in absolute terms corresponding to the length of a pole pair of the magnetic field source (15).

9. Method for determining the absolute position of an element which is movable relative to magnetosensitive sensors using an apparatus for contactlessly detecting an element which is movable relatively and has a magnetic field source fastened on the movable element (6), a first sensor element and a second sensor element being arranged at a distance from the magnetic field source, two magnetosensitive sensors (1, 2) which are spatially offset in the direction of movement being arranged in each sensor element, provision being made for a first sensor signal (101) to be measured using the first magnetosensitive sensor of each sensor element and for a second sensor signal (102) to be measured using the second magnetosensitive sensor of each sensor element, the first sensor signal (101) and the second sensor signal (102) representing a component of the magnetic field, and the sensor signals (101, 102) having a phase offset $\varphi$ in the range of $0° < \varphi < 180°$ or $180° < \varphi < 360°$, provision being made

- for amplitude ratios to be determined by dividing a predefinable signal swing by a difference between a maximum value and a minimum value of the respective sensor signals (101, 102),
- for offset values (103, 104) around the respective zero point of the sensor signals (101, 102) to be determined from the minimum and maximum values of the sensor signals (101, 102),
- for normalized sensor signals (107, 108) to be calculated by subtracting the offset values from the sensor signals (101, 102) and by means of normalization with the amplitude ratios, the minimum and maximum values being determined by means of a relative movement of the element and the magnetic field source fastened thereto over a complete movement path while simultaneously detecting the sensor signals (101, 102) from both sensors (1, 2),
- for a sum signal (109) and a difference signal (110) to be formed from the normalized sensor signals (107, 108),
- **characterized**

**in that** the sum signal (109) and the difference signal (110) are in turn normalized (113, 114) after determining the amplitude ratio, the minimum and maximum values being determined by means of a relative movement of the element and the magnetic field source fastened thereto over a complete movement path while simultaneously measuring the sum signal (109) and the difference signal (110) and evaluating the minimum and maximum values of the sum signal (109) and of the difference signal (110), and

- **in that** an absolute position (202) of the magnetic field source is calculated using the normalized sum signal (113) and the normalized difference signal (114), the absolute position for the sensor signals from each sensor element being redundantly determined.

10. Method according to Claim 9, **characterized in that** the movable element is a rotatable element and an absolute rotational position (202) of the magnetic field source is calculated.

11. Method according to Claim 10, **characterized in that** the absolute rotational position is calculated by forming the arc tangent of the ratio of the normalized sum signal (113) and the normalized difference signal (114) .

**12.** Method according to Claim 9, **characterized in that** the movable element is a linearly displaceable element and an absolute linear position is determined.

**13.** Method according to Claim 10 or 12, **characterized in that** the absolute position of the magnetic field source is calculated using a coordinate transformation algorithm, preferably a CORDIC algorithm.

**Revendications**

**1.** Dispositif de détection sans contact de la position absolue d'un élément mobile par rapport à des capteurs magnétorésistifs, lequel possède une source de champ magnétique fixée sur l'élément (6) mobile, comprenant l'élément mobile et deux capteurs magnétorésistifs (1, 2) se trouvant dans un plan et décalés dans l'espace dans la direction du mouvement, lesquels sont disposés espacés de la source de champ magnétique (15) de telle sorte qu'un premier signal de capteur (101) peut être mesuré avec le premier capteur magnétorésistif et un deuxième signal de capteur (102) peut être mesuré avec le deuxième capteur magnétorésistif, le premier signal de capteur (101) et le deuxième signal de capteur (102) représentant une composante du champ magnétique et les signaux de capteur (101, 102) présentant un déphasage $\varphi$ dans la plage $0° < \varphi < 180°$ ou $180° < \varphi < 360°$,
le dispositif étant réalisé redondant de telle sorte que celui-ci possède deux éléments capteurs (3a, 3b), deux capteurs magnétorésistifs (1, 2) de ce type étant disposés dans chaque élément capteur (3a, 3b) ;
les capteurs magnétorésistifs (1, 2) et les éléments capteurs (3a, 3b) étant intégrés ensemble sur une puce de capteur,
**caractérisé en ce que**
le dispositif comporte en outre une électronique d'interprétation qui est configurée pour calculer, à partir des signaux de capteur d'un élément capteur, une position absolue de la source de champ magnétique en utilisant un signal de somme normalisé et un signal de différence normalisé, le signal de somme étant formé à partir de la somme des deux signaux de capteur et le signal de différence à partir de la différence des deux signaux de capteur et la position absolue pour chaque élément capteur étant déterminée de manière redondante à partir des signaux de capteur de l'élément capteur.

**2.** Dispositif selon la revendication 1, **caractérisé en ce que** l'élément mobile est monté rotatif, **en ce que** le plan est disposé en parallèle à l'axe de rotation et **en ce que** les deux éléments capteurs (3a, 3b) sont logés dans un boîtier (4) commun qui est monté latéralement à la source de champ magnétique parallèlement à l'axe de rotation et contiennent respectivement deux capteurs magnétorésistifs (1a, 2a) et (1b, 2b) se trouvant dans un plan et décalés dans l'espace dans la direction du mouvement de rotation, avec l'électronique d'interprétation associée, et détectent et interprètent les composantes radiales du champ magnétique.

**3.** Dispositif selon la revendication 2, **caractérisé en ce que** l'élément mobile est monté à rotation, **en ce que** le plan est disposé normal par rapport à l'axe de rotation et **en ce que** les deux éléments capteurs (3a, 3b) sont logés dans un boîtier (4) commun qui est monté en position fixe parallèlement au plan et contiennent respectivement deux capteurs magnétorésistifs (1a, 2a) et (1b, 2b) se trouvant dans un plan et décalés dans l'espace dans la direction du mouvement de rotation, avec l'électronique d'interprétation associée, et détectent et interprètent les composantes axiales du champ magnétique.

**4.** Dispositif selon la revendication 3, **caractérisé en ce que** les capteurs magnétorésistifs sont disposés équidistants et symétriquement autour de l'axe de rotation dans le boîtier (4) commun.

**5.** Dispositif selon l'une des revendications 2 à 4, **caractérisé en ce que** la position de rotation absolue est détectée sur une plage angulaire de 360°, la source de champ magnétique étant réalisée sous la forme d'un aimant en disque (7) ou d'un aimant en anneau (9) à magnétisation diamétrale bipolaire.

**6.** Dispositif selon l'une des revendications 2 à 4, **caractérisé en ce que** la position de rotation absolue est détectée sur une plage angulaire < 360°, la source de champ magnétique étant réalisée sous la forme d'un aimant en disque (8) ou d'un aimant en anneau (10) à magnétisation multipolaire.

**7.** Dispositif selon la revendication 1, **caractérisé en ce que** l'élément à mobilité relative peut être déplacé linéairement, une source de champ magnétique réalisée sous la forme d'une bande magnétique multipolaire avec des pôles de même longueur étant fixée sur l'élément à mobilité relative, **en ce que** les capteurs magnétorésistifs détectent les composantes magnétiques normales à la direction du mouvement, l'écart entre deux capteurs magnétorésistifs d'un élément capteur, la longueur des pôles magnétiques ainsi que la position des capteurs magnétorésistifs par rapport à la source de champ magnétique étant à choisir de telle sorte que le déphasage qui en résulte des signaux de capteur de chaque élément capteur n'est pas égal à 180° et pas égal à 360°.

**8.** Dispositif selon la revendication 7, **caractérisé en ce que** deux éléments capteurs (3a, 3b), qui contiennent respectivement deux capteurs magnétorésistifs (1a, 2a) et (1b, 2b) se trouvant dans un plan et décalés dans l'espace dans la direction du mouvement, avec l'électronique d'interprétation associée, et détectent et interprètent une composante du champ magnétique, sont logés dans un boîtier (4) commun qui est monté en position fixe à distance de la source de champ magnétique (15) et en parallèle à la direction du mouvement, et la plage de mesure absolue qui peut être mesurée directement correspondant à la longueur d'une paire de pôles de la source de champ magnétique (15).

**9.** Procédé de détermination de la position absolue d'un élément mobile par rapport à des capteurs magnétorésistifs avec un dispositif de détection sans contact d'un élément à mobilité relative, lequel possède une source de champ magnétique fixée sur l'élément (6) mobile, un premier élément capteur et un deuxième élément capteur étant disposés espacés de la source de champ magnétique, deux capteurs magnétorésistifs (1, 2) décalés dans l'espace dans la direction du mouvement étant disposés dans chaque élément capteur, procédé selon lequel un premier signal de capteur (101) est mesuré avec le premier capteur magnétorésistif de chaque élément capteur et un deuxième signal de capteur (102) est mesuré avec le deuxième capteur magnétorésistif de chaque élément capteur, le premier signal de capteur (101) et le deuxième signal de capteur (102) représentant une composante du champ magnétique et les signaux de capteur (101, 102) présentant un déphasage $\varphi$ dans la plage $0° < \varphi < 180°$ ou $180° < \varphi < 360°$, et selon le procédé,

- des rapports d'amplitude étant déterminés par division d'une excursion de signal pouvant être prédéfinie par une différence entre une valeur maximale et une valeur minimale des signaux de capteur (101, 102) respectifs,
- des valeurs de décalage (103, 104) étant déterminées autour du point zéro respectif des signaux de capteur (101, 102) à partir des valeurs minimale et maximale des signaux de capteur (101, 102),
- des signaux de capteur normalisés (107, 108) étant calculés au moyen d'une soustraction des valeurs de décalage des signaux de capteur (101, 102) et par normalisation avec les rapports d'amplitude, la détermination des valeurs minimale et maximale s'effectuant par un mouvement relatif de l'élément et de la source de champ magnétique qui y est fixée sur une course de mouvement voulue avec acquisition simultanément des signaux de capteur (101, 102) des deux capteurs (1, 2),
- un signal de somme (109) et un signal de différence (110) étant formés à partir des signaux de capteur normalisés (107, 108),

**caractérisé en ce que**

- le signal de somme (109) et le signal de différence (110) sont de nouveau normalisés (113, 114) après la détermination des rapports d'amplitude, la détermination des valeurs minimale et maximale s'effectuant par un mouvement relatif de l'élément et de la source de champ magnétique qui y est fixée sur une course de mouvement complète avec mesure simultanée du signal de somme (109) ainsi que du signal de différence (110) et interprétation des valeurs minimale et maximale du signal de somme (109) et du signal de différence (110) et
- une position absolue (202) de la source de champ magnétique est calculée au moyen du signal de somme normalisé (113) et du signal de différence normalisé (114), la détermination de la position absolue étant réalisée de manière redondante pour les signaux de capteur de chaque élément capteur.

**10.** Procédé selon la revendication 9, **caractérisé en ce que** l'élément mobile est un élément rotatif et une position de rotation absolue (202) de la source de champ magnétique est calculée.

**11.** Procédé selon la revendication 10, **caractérisé en ce que** la position de rotation absolue est calculée en formant l'arc tangent du rapport du signal de somme normalisé (113) et du signal de différence normalisé (114) .

**12.** Procédé selon la revendication 9, **caractérisé en ce que** l'élément mobile est un élément qui peut être déplacé linéairement et une position linéaire absolue est déterminée.

**13.** Procédé selon la revendication 10 ou 12, **caractérisé en ce que** la position absolue de la source de champ magnétique est calculée au moyen d'un algorithme de transformation de coordonnées, de préférence avec un algorithme de CORDIC.

FIG 1

2b
3b
1b
4
1a
3a
2a

FIG 2

1b
3b
2b
4
1a
3a
2a

FIG 3

14
6
N
S
7
4
1
2

FIG 4

4
6
2
N
S
1
14
7

FIG 5
FIG 6
FIG 7
FIG 8
N
S
7
N
S
9
N
S
S
N
8
N
S
S
N
10

FIG 9
14
6
N
S
7
3b
1b
2a
2b
4
1a
3a

FIG 10

2b
3b
1b
αb
4
N
14
S
7
αa
1a
3a
2a

FIG 11

2b
3b
1b
αb
4
N
14
S
7
αa
1a
3a
2a

FIG 12
2b
3b
1b
4
3a
1a
2a
αa
αb
N
S
7
14

FIG 13
2b
3b
1b
4
3a
1a
2a
αa
αb
N
S
7
14

FIG 14
100
200
103
Offset 1
105
Gain 1
111
Gain 3
1
Hall
Sensor 1
101
107
109
Sin
113
2
Hall
Sensor 2
102
108
110
Cos
114
Offset 2
104
Gain 2
106
Gain 4
112
201
AE
202
W
B
203
204
Nullpunkt
205
Lin
W_L
206
Ana_
SS
W_Ana
207
Dig_
SS
W_Dig
208

FIG 15
200
1
Hall Sensor 1
101
201/1
ADU
201/2
RE
W_L
207
W_Ana
Ana_SS
Hall Sensor 2
206
W_Dig
Dig_SS
102
2
208
Digitaler Speicher:
Offset 1, 2, Gain 1, 2, 3, 4
Linearisierung
201/3

FIG 16
Eingangssignale
102, 202
101, 201
Signalpegel
1,5
1,0
0,5
0,0
-0,5
-1,0
-1,5
0
30
60
90
120
150
180
210
240
270
300
330
360
Lineare Position: 360°=eine Polpaarlänge

FIG 17

Eingangssignale normiert
108
107
1,5
1
0,5
0,0
-0,5
-1
-1,5
Signalpegel
0
30
60
90
120
150
180
210
240
270
300
330
360

Lineare Position: 360°=eine Polpaarlänge

FIG 18

109
Summe und Differenz
110
2
1,5
1
0,5
0,0
-0,5
-1
-1,5
-2
Signalpegel
0
30
60
90
120
150
180
210
240
270
300
330
360
Lineare Position: 360°=eine Polpaarlänge

Summe
Differenz

FIG 19

Summe und Differenz normiert
114
113
202
1,5
1
0,5
0,0
-0,5
-1
-1,5
Signalpegel
180
90
0
-90
-180
Winkel [°]
0 30 60 90 120 150 180 210 240 270 300 330 360
Lineare Position: 360°=eine Polpaarlänge

FIG 20
Amplitudenverhältnis: Summe [pk] / Differenz [pk]
10
9
8
7
6
5
4
3
2
1
0
Sum_pk / Diff_pk
116/115
Gain4/Gain3
0 30 60 90 120 150 180 210 240 270 300 330 360
Phasenverhältnis H2 - H1 [°]

FIG 21

1b
3b
2b
6
N
S
7
4
1a
2a
3a
14

FIG 22

4
1a, 2b
N
6
7
14
S
2a, 1b
3a, b

FIG 23
13
16
N
S
N
S
N
S
N
15
1
2
5

FIG 24
S
N
S
16
15
1b
3b
2b
4
1a
3a
2a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO D19817356 A1
- WO D10360042 A1
- EP 2233889 A1
- WO 2007071383 A